# EUROPÄISCHE PATENTSCHRIFT

(11) **EP 3 408 121 B1**
(45) Veröffentlichungstag und Bekanntmachung des Hinweises auf die Patenterteilung: **05.10.2022**
(21) Anmeldenummer: 17700274.8
(22) Anmeldetag: 11.01.2017
(51) Int. Cl.: B60J 10/17, B60J 10/74

(54) **PROFILSTRANG FÜR EIN KRAFTFAHRZEUG UND PROFILSTRANG-HERSTELLUNGSVERFAHREN**
PROFILE STRIP FOR A MOTOR VEHICLE AND PROFILE STRIP PRODUCTION METHOD
PROFILÉ DESTINÉ À UN VÉHICULE AUTOMOBILE ET PROCÉDÉ DE FABRICATION D'UN PROFILÉ

(30) Priorität: 26.01.2016 DE 102016101312
(43) Veröffentlichungstag der Anmeldung: 05.12.2018
(73) Patentinhaber: Cooper Standard GmbH, 88131 Lindau (DE)
(72) Erfinder: SCHMID, Thomas, 88085 Langenargen (DE); SCHRAMM, Dominik, 88142 Wasserburg (DE)
(74) Vertreter: Witte, Weller & Partner Patentanwälte mbB
(86) Internationale Anmeldenummer: PCT/EP2017/050444
(87) Internationale Veröffentlichungsnummer: WO 2017/129401

(56) Entgegenhaltungen:
- WO-A1-01/85482
- JP-A- 2000 272 350
- US-A1- 2002 110 663

## Beschreibung

Die vorliegende Erfindung betrifft einen Profilstrang für ein Kraftfahrzeug, insbesondere für eine Dichtungsanordnung in einem Fenster- oder Türbereich eines Kraftfahrzeuges, mit einem Befestigungsprofilabschnitt, der an einem ersten Teil des Kraftfahrzeugs festlegbar ist, und mit einem Dichtungsprofilabschnitt, der mit dem Befestigungsprofilabschnitt verbunden ist, der aus einer vulkanisierten Kautschuk-Matrix hergestellt ist und der dazu ausgebildet ist, Relativbewegungen mit geringer Reibung zwischen dem Profilstrang und einem zweiten Teil des Kraftfahrzeugs zu ermöglichen, wobei eine mit dem zweiten Teil in Berührung tretbare Kontaktfläche des Dichtungsprofilabschnittes mit einer Gleitbeschichtung versehen ist, die eine Gleitbeschichtungs-Matrix und in die Gleitbeschichtungs-Matrix eingebettete Gleitpartikel aufweist, die aus UHWM-PE (ultrahochmolekulares Polyethylen) hergestellt sind. Solche Profilstränge sind z.B. aus US 2002/110663 A1, JP 2000 272350 A und WO 01/85482 A1 bekannt.

Ferner betrifft die vorliegende Erfindung ein Verfahren zum Herstellen eines Profilstranges für ein Kraftfahrzeug und ein Verfahren zum Herstellung einer Dichtungsanordnung für ein Kraftfahrzeug, die einen solchen Profilstrang verwendet.

Profilstränge der oben bezeichneten Art werden insbesondere zur Abdichtung von Fenstern, von Türen oder von Deckeln oder Hauben eines Kraftfahrzeuges verwendet. Der Befestigungsprofilabschnitt wird dabei in der Regel an einem karosseriefesten Teil des Kraftfahrzeuges festgelegt. Der Profilstrang ist dazu ausgelegt, dass dessen Dichtungsprofilabschnitt mit einer Kontaktfläche an einem in Bezug auf die Karosserie beweglichen Teil des Kraftfahrzeuges anliegen kann. Dieses Teil des Kraftfahrzeuges kann beispielsweise ein Seitenfenster sein, das in einen Fensterschacht eingefahren werden kann, es kann jedoch auch eine Tür sein, die an ihrem Außenumfang gegenüber einer Türöffnung abgedichtet wird. Ferner kann das bewegliche Teil ein Kofferraumdeckel sein, eine Motorhaube oder dergleichen. Diese Anwendungsfälle für Profilstränge sind jedoch rein bespielhaft zu verstehen. Der Profilstrang kann auch für andere Dichtungsaufgaben zwischen zwei gegeneinander beweglichen Teilen verwendet werden.

Auf dem Gebiet der Dichtungsanordnungen für Kraftfahrzeuge wird generell zwischen solchen Profilsträngen unterschieden, die auf einem elastisch verformbaren thermoplastischen Material basieren, das nicht vernetzt also wiederaufschmelzbar ist. Derartige Materialien sind vergleichsweise kostengünstig und unempfindlich. Alternativ basieren derartige Profilstränge auf vernetztem Kautschuk, insbesondere auf EPDM (Ethylen-Propylen-Dien-Monomer). Die elastischen Eigenschaften von EPDM sind jenen von thermoplastischen Elastomeren (TPE) überlegen. EPDM ist ein hochwertiger synthetischer Kautschuktyp mit hoher Resistenz gegen Chemikalien, gegen UV-Strahlung und auch gegen Wettereinflüsse.

Die Herstellungsverfahren für TPE einerseits und für EPDM (oder andere vernetzte Kautschukmaterialien) unterscheiden sich erheblich.

Das EPDM-Material wird in der Regel zunächst bei etwa 90° C bis 110° C extrudiert. Anschließend erfolgt eine Erhöhung der Temperatur auf bis zu 200° C, um das EPDM-Material zu vernetzen (beispielsweise durch eine Schwefelvernetzung).

Das thermoplastische Material von thermoplastischen Elastomeren ist hingegen bei 100° C in der Regel noch nicht aufgeschmolzen und schmilzt bei Temperaturen im Bereich von 200° C.

Trotz dieser grundlegenden Unterschiede hinsichtlich der Verarbeitbarkeit ist es möglich, auf einen vernetzten Dichtungsprofilabschnitt aus EPDM eine Gleitbeschichtung aufzubringen, die auf einem thermoplastischen Material basiert, in das Gleitpartikel eingebettet sind.

Die Gleitpartikel sorgen dabei an der Kontaktfläche des Dichtungsprofilabschnittes dafür, dass zwischen der Kontaktfläche und dem diese berührenden Teil des Kraftfahrzeuges ein sehr niedriger Reibungskoeffizient vorhanden sein kann, der beispielsweise kleiner sein kann als 0,5 und niedrige Werte bis hin zu 0,15 erreichen kann.

In manchen Fällen werden die Profilstränge nach ihrer Herstellung in eine Spritzgussform eingelegt, um an dem Profilstrang noch weitere Dichtungsmerkmale anzuspritzen, und zwar aus thermoplastischen Kunststoffen oder aus EPDM.

Bei einem Profilstrang aus EPDM, auf den eine Gleitbeschichtung auf der Grundlage eines thermoplastischen Kunststoffes aufgebracht worden ist, müssen diese zusätzlichen Dichtungsmerkmale dann ebenfalls aus thermoplastischem Kunststoffmaterial hergestellt sein.

Problematisch ist es hierbei, dass in den Spritzgussformen hohe Temperaturen auftreten können, die dazu führen können, dass die TP-Gleitbeschichtung an der Oberfläche aufschmilzt, was optische und/oder funktionale Nachteile mit sich bringen kann.

Weitere Möglichkeiten, einen Reibungswiderstand im Bereich einer Kontaktfläche eines Dichtungsprofilabschnittes niedrig zu halten, sind Folgende.

Zum einen kann auf einen Dichtungsprofilabschnitt im Bereich einer Kontaktfläche ein Gleitlack aufgebracht werden. Dessen Formstabilität in heißen Formen wie Spritzgussformen ist sehr gut. Es sind jedoch separate Prozessschritte erforderlich. Die Anfriereigenschaften sind gut bis sehr gut, und auch das Geräuschverhalten und die Langlebigkeit im Dauerlauf sind gut bis befriedigend. Die Haftung auf dem Dichtungsprofilabschnitt ist jedoch in der Regel nicht befriedigend.

Eine weitere Möglichkeit besteht darin, die Kontaktfläche zu beflocken. Hier ist die Formstabilität in heißen Formen relativ schlecht. Zudem sind die Produkteigenschaften in vieler Hinsicht nicht befriedigend, insbesondere hinsichtlich Anfriereigenschaften und Geräuschverhalten bei feuchtwarmem Klima. Auch die Haftung auf dem Untergrund ist in der Regel allenfalls befriedigend bis schlecht.

Eine weitere Möglichkeit besteht darin, eine Folie auf den Dichtungsprofilabschnitt aufzubringen, die insbesondere aus ultrahochmolekularem PE (UHMW-PE) hergestellt sein kann. Die Produkteigenschaften sind hierbei sehr gut. Es ist jedoch ein aufwendiger separater Prozessschritt erforderlich, bei dem hohe Ausschusskosten zu erwarten sind.

Eine Gleitbeschichtung der oben beschriebenen Art, mit in einer thermoplastischen Matrix eingebetteten Gleitpartikeln weist ebenfalls sehr gute Produkteigenschaften auf, beinhaltet jedoch die oben beschriebenen Probleme hinsichtlich der Formstabilität in heißen Formen und hinsichtlich der Ausformung im Werkzeug.

Das Dokument DE 10 2013 109 567 B4 offenbart einen Profilstrang für ein Kraftfahrzeug, mit einem Befestigungsabschnitt, einem Dekorabschnitt und einem Dichtungsabschnitt. Der Dekorabschnitt ist durch eine elastomere EPDM-Matrix (Ethylen-Propylen-Dien-Monomer) und darin eingebettete Flockfasern gebildet, die abschnittsweise gegenüber der EPDM-Matrix vorstehen, um eine textilähnliche Haptik zu realisieren. Der Dichtungsabschnitt kann ebenfalls aus EPDM gebildet sein und weist eine Dichtungsfläche mit einer Beflockungsschicht aus Flock auf, wobei die Beflockungsschicht zudem mit einer Gleitlackschicht versehen sein kann.

Aus dem Dokument WO2006/041362 A1 ist ein Verfahren zum Bereitstellen eines Fensterdichtungs-Profilstranges bekannt, bei dem zunächst ein Basisprofilstrang aus einem Polymermaterial extrudiert wird, das EPDM und/oder TPE (thermoplastisches Elastomer) enthält, und wobei vor einem Vernetzungsschritt eine nicht-kontinuierliche Beschichtung aus UHMW-PE (Polyethylen mit ultrahohem Molekulargewicht) oder aus VHMW-PE (sehr hochmolekulares PE, very high molecular weight PE) auf den extrudierten Basisprofilstrang aufgebracht wird, und zwar durch eine thermochemische Behandlung wie Besprühen oder dergleichen in einer Behandlungskammer, mit dem Zweck, einen aufwändigen Laminierungsprozess zu vermeiden.

Ferner sind aus dem Dokument EP 1 342 751 B1 Zusammensetzungen bekannt, die als Dichtungen verwendet werden können und die eine EPDM-Matrix und Partikel aus HMW-PE (Polyethylen mit hohem Molekulargewicht) oder aus UHMW-PE (high molecular weight PE) enthalten, wobei die Partikel eine irreguläre Gestalt mit einer porösen Struktur und einer Schüttdichte von kleiner 0,35 g/cm³ aufweisen.

Vor diesem Hintergrund ist es eine Aufgabe der Erfindung, einen verbesserten Profilstrang für ein Kraftfahrzeug sowie ein verbessertes Verfahren zum Herstellen eines solchen Profilstranges und ein verbessertes Verfahren zum Herstellen einer Dichtungsanordnung für ein Kraftfahrzeug herzustellen.

Diese Aufgabe wird bei dem eingangs genannten Profilstrang dadurch gelöst, dass die

Gleitbeschichtungs-Matrix eine vulkanisierte EPDM-Matrix ist und, dass der Dichtungsprofilabschnitt und die Gleitbeschichtung co-extrudiert sind.

Ferner wird die obige Aufgabe gelöst durch ein Verfahren zum Herstellen eines Profilstranges für ein Kraftfahrzeug, insbesondere eines erfindungsgemäßen Profilstranges, mit den Schritten, ein Kautschukmaterial aus einer ersten Mischung bereitzustellen, und zwar für einen Dichtungsprofilabschnitt des Profilstranges, ein EPDM-Material aus einer zweiten Mischung bereitzustellen, wobei das EPDM-Material eine EPDM-Matrix und Gleitpartikel aus UHMW-PE beinhaltet, und zwar für eine Gleitbeschichtung des Dichtungsprofilabschnittes, und das Kautschuk- und das EPDM-Material zu co-extrudieren, so dass ein Profilstrang mit einem Dichtungsprofilabschnitt aus dem Kautschukmaterial und einer Gleitbeschichtung an einer Kontaktfläche des Dichtungsprofilabschnittes gebildet wird.

Schließlich wird die obige Aufgabe gelöst durch ein Verfahren zum Herstellen einer Dichtungsanordnung für ein Kraftfahrzeug, mit den Schritten, einen erfindungsgemäßen Profilstrang bereitzustellen oder einen Profilstrang gemäß dem erfindungsgemäßen Profilstrang-Herstellungsverfahren herzustellen, wobei das Kautschukmaterial des Dichtungsprofilabschnittes ein weiteres EPDM-Material ist, das nach dem Co-Extrusionsschritt gemeinsam mit dem EPDM-Material der Gleitbeschichtung vulkanisiert worden ist, wobei das Verfahren zum Herstellen einer Dichtungsanordnung die weiteren Schritte beinhaltet, den Profilstrang in eine Spritzgussform einzulegen und an den Profilstrang wenigstens ein Dichtungsmerkmal aus einem EPDM-Spritzgussmaterial anzuspritzen.

Ein Profilstrang mit einer Gleitbeschichtungs-Matrix aus einer vulkanisierten EPDM-Matrix hat zum einen sehr gute Produkteigenschaften. Sowohl die Anfriereigenschaften, das Geräuschverhalten, die Langlebigkeit im Dauerlauf als auch die Haftung auf dem Untergrund (vulkanisierte Kautschuk-Matrix des Dichtungsprofilabschnittes) sind jeweils sehr gut.

Auch ergibt sich eine sehr gute Formstabilität in heißen Formen, wobei Dichtungsmerkmale an den Profilstrang aus einem EPDM-Spritzgussmaterial angespritzt werden können. Ferner erfolgt erfindungsgemäß eine Aufbringung der Gleitbeschichtung im Werkzeug durch Co-Extrudieren des Kautschuk-Materials des Dichtungsprofilabschnittes und des EPDM-Materials der Gleitbeschichtung. Der Profilstrang kann insgesamt aus vernetztem Matrix-Material zusammengesetzt sein, so dass der Profilstrang insgesamt thermisch stabil ist.

Die Gleitpartikel aus UHMW-PE stellen einen niedrigen Reibkoeffizienten zwischen der Kontaktfläche und dem zweiten Teil des Kraftfahrzeuges (zum Beispiel Fenster) zur Verfügung. Die Gleitpartikel aus UHMW-PE haben ferner hydrophobe Eigenschaften. Die Gleitpartikel sind insbesondere Gleitpartikel mit einer im Wesentlichen sphärischen Form.

Bei dem Anspritzen von Dichtungsmerkmalen aus dem EPDM-Spritzgussmaterial kann es zwar vorkommen, dass die Gleitpartikel schmelzen bzw. anschmelzen. Aufgrund des Materials mit ultrahohem Molekulargewicht findet jedoch hierbei allenfalls eine Umformung von kristallin auf amorph statt, so dass die generelle Form aufgrund der hohen Oberflächungenspannung auch bei einem Aufschmelzen erhalten bleibt. Mit anderen Worten werden die für die Gleitbeschichtung wesentlichen Eigenschaften der Gleitpartikel bei dem Anspritzen von Dichtungsmerkmalen aus einem EPDM-Spritzgussmaterial nicht wesentlich oder gar nicht verschlechtert. Die Schüttdichte der verwendeten Gleitpartikel ist in der Regel ≥ 0,4 g/cm³.

Bei dem Co-Extrudieren findet in der Regel keine bzw. nur eine vernachlässigbare chemische Bindung zwischen dem Kautschuk- und dem EPDM-Material der Gleitbeschichtung statt. Die Verbindung zwischen diesen Materialien ist eine technische Verbindung, die sich im Schnittbild als Trennschicht zeigt.

Die Produkteigenschaften der Gleitpartikel aus UHMW-PE ergeben sich aus einer Boschüre "Spezialprodukte-GUR^{®} UHMW-PE Produkte als Gummiadditive - Produktinformation" mit dem Copyrightvermerk 2013 des Herstellers Celanese, oder aus der zugehörigen EP 1 342 751 B1.

Die Aufgabe wird insgesamt vollkommen gelöst.

Bei einer bevorzugten Ausführungsform des Profilstranges ist die Gleitbeschichtungs-Matrix aus einer EPDM-Mischung hergestellt, die folgende Bestandteile aufweist: 20 Gew.-% bis 40 Gew.-% EPDM und 5 Gew.-% bis 50 Gew.-% Gleitpartikel sowie als Rest Zuschlagstoffe und/oder Vernetzungsmittel.

Besonders bevorzugt ist es, wenn die EPDM-Mischung EPDM in einem Anteil von 20 Gew.-% bis 30 Gew.-% beinhaltet, insbesondere in einem Bereich von 20 Gew.-% bis 26 Gew.-%. Ferner ist es bevorzugt, wenn die EPDM-Mischung der Gleitbeschichtung 4 Gew.-% bis 40 Gew.-% Gleitpartikel beinhaltet, insbesondere 4 Gew.-% bis 38 Gew.-% und besonders bevorzugt 25 Gew.-% bis 35 Gew.-%, jeweils einschließlich der genannten Werte.

Der Zuschlagstoff bzw. die Zuschlagstoffe können ausgewählt sein aus einem oder mehreren der folgenden Bestandteile: Carbon Black, PE Wachs, Paraffinöl, Stearinsäure, Polyethylenglykol (PEG) mit hoher Molekülmasse, Zinkoxid, ein Beschleunigungssystem, das schwefeltypisch und frei von NO ist, Calciumoxid (CaO).

Von besonderem Vorzug ist es, wenn die EPDM-Mischung 20 Gew.-% bis 50 Gew.-% Carbon Black, 1 Gew.-% bis 30 Gew.-% thermoplastisches olefinisches Kunstharz und/oder 2 Gew.-% bis 15 Gew.-% Öl als Zuschlagstoff(e) aufweist, und/oder wobei die EPDM-Mischung als Rest Vernetzungsmittel aufweist.

Besonders bevorzugt ist es hierbei, wenn der Anteil an thermoplastischem olefinischem Kunstharz in einem Bereich von 3 Gew.-% bis 20 Gew.-%, insbesondere von 4 Gew.-% bis 15 Gew.-% liegt, wobei das Kunstharz vorzugsweise ein PE-Wachs ist, und zwar insbesondere in Form eines PE-Homopolymers mit einem Tropfpunkt ("drop point") von 106° C.

Zudem ist es bevorzugt, wenn die EPDM-Mischung Öl in einem Anteil von 5 Gew.-% bis 12 Gew.-% beinhaltet, insbesondere in einem Anteil von 6 Gew.-% bis 10 Gew.-%.

Das Öl kann insbesondere ein Paraffinöl sein.

Stearinsäure liegt in der EPDM-Mischung vorzugsweise in einem Anteil von weniger als 2 Gew.-% vor. Gleiches gilt für das Polyethylenglykol, das Zinkoxid, das Beschleunigungssystem und das Calciumoxid.

Ferner ist es bevorzugt, wenn als Rest ein Vernetzungsmittel wie Schwefel vorhanden ist, das in einem Gew.-%-Anteil von weniger als 2 Gew.-% in der EPDM-Mischung vorhanden ist. Der Schwefel kann in einem Anteil von 0,5 bis 2 phr (parts per hundred rubber) zugefügt sein.

Insgesamt ist es ferner bevorzugt, wenn die vulkanisierte Gleitbeschichtungs-EPDM-Matrix eine höhere Festigkeit und/oder Steifigkeit und/oder Härte und/oder ein höheres Modul aufweist als die vulkanisierte Kautschuk-Matrix des Dichtungsprofilabschnittes.

Hierdurch kann erreicht werden, dass die Gleitpartikel der Gleitbeschichtung sich sicher in der Gleitbeschichtungs-EPDM-Matrix verankern lassen, diese also nicht ausreißt oder auf sonstige Art und Weise Gleitpartikel verliert.

Von besonderem Vorzug ist es hierbei, wenn die Gleitbeschichtungs-EPDM-Matrix eine Shore A Härte in einem Bereich von 75 bis 98 aufweist, insbesondere in einem Bereich von 85 bis 97, und/oder eine Zugfestigkeit in einem Bereich von 5 N/mm² bis 8 N/mm², insbesondere in einem Bereich von 6 N/mm² bis 7,5 N/mm².

Die Kautschuk-Matrix des Dichtungsprofilabschnittes weist vorzugsweise eine Shore A Härte in einem Bereich von 45 bis 74 auf, insbesondere eine Shore A Härte in einem Bereich von 50 bis 70.

Das Verhältnis der Shore A Härten von Gleitbeschichtungs-EPDM-Matrix zu Kautschuk-Matrix des Dichtungsprofilabschnittes liegt vorzugsweise in einem Bereich von 1,2 bis 1,5, insbesondere von 1,3 bis 1,4.

Ferner ist es insgesamt vorteilhaft, wenn die Gleitbeschichtung eine Dicke in einem Bereich von 0,05 mm bis 0,5 mm aufweist.

Zudem ist es vorteilhaft, wenn die Gleitpartikel einen mittleren Durchmesser in einem Bereich von 20 µm bis 200 µm aufweisen, insbesondere in einem Bereich von 50 µm bis 150 µm, insbesondere in einem Bereich von 80 µm bis 120 µm. Wie erwähnt, weisen die Gleitpartikel vorzugsweise eine zumindest annähernd sphärische Form auf.

Ferner ist es vorteilhaft, wenn der Dichtungsprofilabschnitt aus einer vulkanisierten EPDM-Matrix hergestellt ist, die vorzugsweise gleichzeitig mit der Gleitbeschichtungs-EPDM-Matrix urgeformt und/oder vulkanisiert worden ist.

Hierdurch kann der Profilstrang zum einen günstig hergestellt werden, da die gleiche Werkzeugart zur Urformung und/oder die gleiche Behandlungsart zur Vulkanisierung verwenden werden können.

Gemäß der Erfindung sind der Dichtungsprofilabschnitt und die Gleitbeschichtung co-extrudiert.

Insgesamt wird mit der Erfindung wenigstens einer der folgenden Vorteile und/oder wenigstens eines der folgenden Merkmale realisiert.

Die Gleitbeschichtung ist vorzugsweise eine co-extrudierbare Gleitschicht mit niedrigem Reibkoeffizienten gegen Glas (zum Beispiel in einem Bereich von kleiner 0,4 und vorzugsweise kleiner 0,25).

Die Gleitbeschichtung weist ferner eine hohe Abriebbeständigkeit auf, die durch Vernetzung thermisch fixiert ist. Auch an heißen Oberflächen wie Spritzgieß-Werkzeugen schmilzt die Gleitschicht folglich nicht auf oder verändert ihre Form. Aufgrund der EPDM-Matrix der Gleitbeschichtung weist die Gleitbeschichtung eine sehr gute Haftung zu EPDM-Untergründen an Profilen oder Formteilen auf. Sehr gute Gleiteigenschaften werden durch eine hohe Füllung mit Gleitpartikeln aus UHMW-PE in einer geeignet harten EPDM-Mischungsmatrix erreicht.

Die Gleitbeschichtung hat ferner den Vorteil, dass eine hohe Dichtigkeit erzielt werden kann und niedrige Geräusche bei Relativbewegungen zu dem zweiten Teil Kraftfahrzeugs. Zudem ist der Profilstrang insgesamt kostengünstig herstellbar.

Insgesamt wird die Gleitbeschichtung folglich hergestellt durch die Kombination einer vernetzten EPDM-Matrix, die folglich thermisch stabil ist, mit Füllstoffen in Form von Gleitpartikeln, die einen niedrigen Reibkoeffizienten aufweisen und/oder hydrophobe Eigenschaften besitzen.

Die Gleitpartikel sind in der Gleitbeschichtungsmatrix mit einem sehr hohen Füllgrad enthalten, und zwar vorzugsweise wenigstens 25 Gew.-% bis zu 50 Gew.-%, wie oben erläutert.

Ferner ist die EPDM-Matrix der Gleitbeschichtung mit einem hohen Modul bzw. einer hohen Härte ausgestattet. Durch die Verwendung von EPDM mit einer Dien-Komponente ist eine Schwefelvernetzung möglich. Es ergibt sich eine Gleitbeschichtungs-Materialklasse, die nach der Vernetzung geometrisch stabil ist, und zwar auch bei thermischen Einwirkungen. Ferner ergeben sich bei Zuschlagstoffen, die ein Öl beinhalten, wie beispielsweise ein Paraffinöl bzw. Silikon-Öl, sehr gute Eigenschaften hinsichtlich der Abriebbeständigkeit.

Das EPDM-Material weist insbesondere ein EPDM-Material mit hohem C2-Wert auf. Von besonderem Vorzug ist ferner, dass der Profilstrang auf einer Herstellungslinie für EPDM herstellbar ist und hiermit vollständig kompatibel sein kann. Eine Vermischung von EPDM mit thermoplastischen Abschnitten in Form einer Co-Extrusion wird vermieden, so dass die Prozesskosten insgesamt verringert werden können. Zudem kann der Profilstrang ein hohes Maß an Elastizität im Bereich des Dichtungsprofilabschnittes aufweisen.

Die EPDM-Matrix der Gleitbeschichtung weist neben den oben genannten Angaben hinsichtlich Härte und Zugfestigkeit vorzugsweise eine spezifische Dichte in einem Bereich von 0,9 bis 1,2 g/cm³ auf. Die Längung ("elongation") beträgt vorzugsweise 100 bis 120 %.

Der Reibungskoeffizient gegen Glas liegt statisch vorzugsweise in einem Bereich von 0,2 bis 0,3, und dynamisch vorzugsweise in einem Bereich von 0,18 bis 0,25.

Die Mooney-Viskosität (bei 121° C) liegt vorzugsweise in einem Bereich von 7 MU bis 11 MU. Der Druckverformungsrest nach XY liegt nach 22 Stunden bei 70° C in einem Bereich von 80 % bis 90 %.

Sämtliche Bereichsangaben beinhalten vorliegend auch die jeweils genannten Grenzwerte.

Ausführungsbeispiele der Erfindung sind in der Zeichnung dargestellt und werden in der nachfolgenden Beschreibung näher erläutert. Es zeigen:
- Fig. 1: eine schematische Darstellung eines Kraftfahrzeuges, an dem eine oder mehrere Dichtungsanordnungen mit erfindungsgemäßen Profilsträngen eingebaut sind;
- Fig. 2: zeigt eine schematische Querschnittsansicht einer Dichtungsanordnung mit einem erfindungsgemäßen Profilstrang;
- Fig. 3: ist eine schematische vergrößerte Ansicht eines Abschnittes III der Fig. 2;
- Fig. 4: ist eine schematische vergrößerte Ansicht eines Abschnittes IV der Fig. 3;
- Fig. 5: ist eine schematische Darstellung einer weiteren Ausführungsform eines erfindungsgemäßen Profilstranges in einer Schnittansicht entlang der Linie V-V der Fig. 1;
- Fig. 6: ist eine schematische Darstellung einer weiteren Ausführungsform eines erfindungsgemäßen Profilstranges in einer Schnittansicht entlang der Linie VI-VI der Fig. 1; und
- Fig. 7: ist eine schematische Darstellung einer Spritzgussform mit einem darin eingelegten Profilstrang und daran angespritzten weiteren Dichtungsmerkmalen.

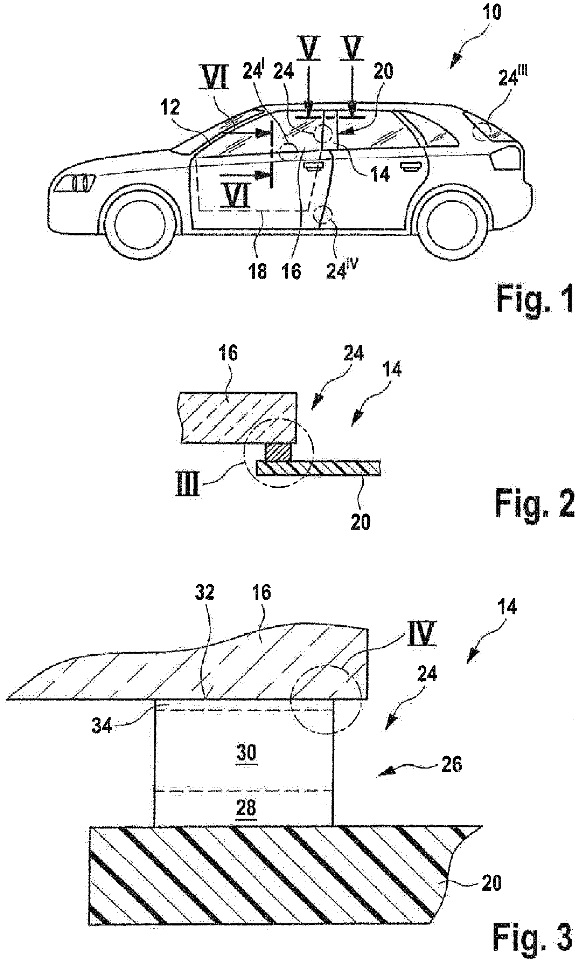

In Fig. 1 ist ein Kraftfahrzeug in Form eines Personenkraftwagens schematisch dargestellt und generell mit 10 bezeichnet.

Das Kraftfahrzeug 10 beinhaltet eine Karosserie, die in an sich bekannter Weise im Bereich eines Fahrgastraumes eine A-Säule 12 und eine B-Säule 14 beinhaltet, sowie eine nicht näher bezeichnete C-Säule. Im Bereich dieser Säulen sind an dem Fahrzeug vertikal verschiebliche Fenster 16 vorgesehen, die beispielsweise in einen schematisch angedeuteten Fensterschacht 18 in einer Tür versenkbar sind.

Ferner beinhaltet die Karosserie die Kraftfahrzeuges 10 Karosserieteile 20 wie beispielsweise eine B-Säulenabdeckung oder eine Tür oder dergleichen, zwischen denen und einem Fenster 16 eine Abdichtung zu erfolgen hat, in Form schematisch angedeuteter Dichtungsanordnungen 24, 24'.

In Fig. 1 ist ferner angedeutet, dass derartige Dichtungsanordnungen auch im Bereich zwischen einer Tür und einem feststehenden Teil der Karosserie vorgesehen sein können (24^{IV}), sowie zwischen feststehenden Teilen der Karosserie und einer Motorhaube (24") und/oder einem Gepäckraumdeckel oder einer Heckklappe (24‴).

In Fig. 2 ist eine erste derartige Dichtungsanordnung 24 dargestellt, die beispielhaft zwischen einem Karosserieteil, wie einer B-Säulenabdeckung 20 einer Tür, und einem relativ hierzu verschieblichen Fenster 16 angeordnet ist.

Fig. 3 zeigt eine Detailansicht dieser Dichtungsanordnung 24.

Es ist zu erkennen, dass die Dichtungsanordnung 24 im Wesentlichen durch einen Profilstrang 26 gebildet sein kann, der in den Figuren 2 und 3 im Querschnitt gezeigt ist.

Der Profilstrang 26 beinhaltet einen Befestigungsprofilabschnitt 28, der an dem feststehenden Teil der Karosserie (z.B. B-Säulenabdeckung) 20 festgelegt ist. Die Art der Festlegung spielt im vorliegenden Zusammenhang keine Rolle. Dies kann eine Klebeverbindung sein, eine Pressverbindung oder dergleichen.

Der Profilstrang 26 beinhaltet ferner einen Dichtungsprofilabschnitt 30, der auf einer dem Karosserieteil 20 gegenüberliegenden Seite des Befestigungsprofilabschnittes 28 angeordnet ist, und zwar auf der dem Fenster 16 zugewandten Seite. Der Dichtungsprofilabschnitt 30 und der Befestigungsprofilabschnitt 28 sind jeweils aus einem vulkanisierten Kautschuk-Material hergestellt, insbesondere aus vulkanisiertem EPDM-Material. Der Dichtungsprofilabschnitt 30 und der Befestigungsprofilabschnitt 28 können aus identischen EPDM-Materialien hergestellt sein, sind jedoch vorzugsweise aus unterschiedlichen EPDM-Materialien hergestellt. Der Dichtungsprofilabschnitt 30 und der Befestigungsprofilabschnitt 28 können vorzugsweise gleichzeitig urgeformt und/oder vulkanisiert worden sein, insbesondere durch Co-Extrusion.

Der Dichtungsprofilabschnitt 30 weist eine Kontaktfläche 32 auf, die an dem Fenster 16 anliegt.

Der Dichtungsprofilabschnitt 30 ist im Bereich der Kontaktfläche 32 zumindest abschnittsweise mit einer Gleitbeschichtung 34 beschichtet.

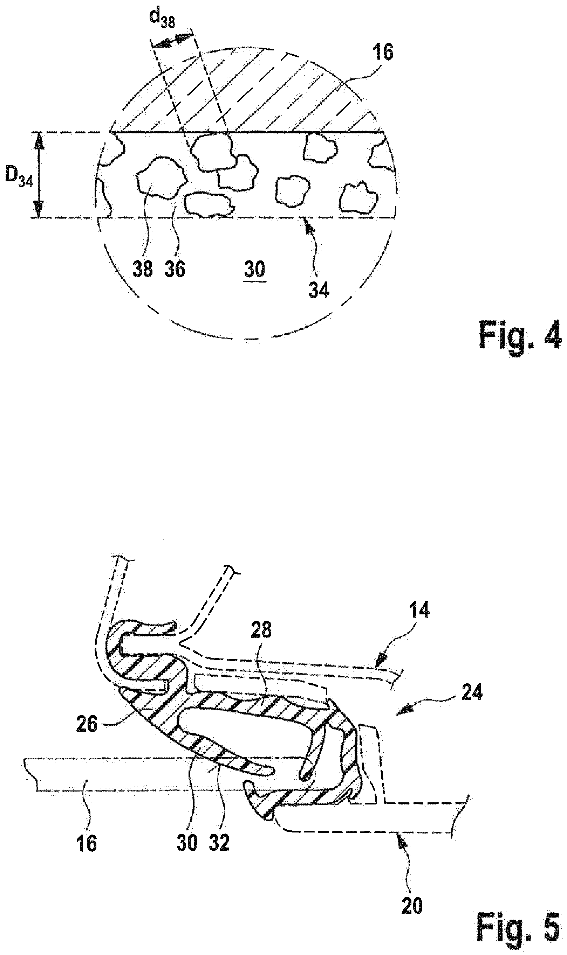

Die Gleitbeschichtung 34 beinhaltet, wie es der vergrößerten schematischen Darstellung der Fig. 4 zu entnehmen ist, eine Gleitbeschichtungs-Matrix in Form einer vulkanisierten EPDM-Matrix 36 sowie Gleitpartikel 38.

Die Gleitbeschichtung 34 weist eine mittlere Materialstärke bzw. Dicke D₃₄ in einem Bereich von **0,05 mm** bis **0,5 mm** auf. Die in die EPDM-Matrix 36 eingebetteten Gleitpartikel 38 weisen vorzugsweise einen Durchmesser d₃₈ auf, der in einem Bereich von 20 µm bis 200 µm liegt.

Die Gleitbeschichtungs-Matrix 36 ist vorzugsweise aus einer EPDM-Mischung hergestellt, die folgende Bestandteile aufweist: 20 Gew.-% bis 40 Gew.-% EPDM und 3 Gew.-% bis 50 Gew.-% Gleitpartikel sowie als Rest Zuschlagstoff(e) und/oder Vernetzungsmittel.

Ferner ist es vorteilhaft, wenn die EPDM-Mischung 20 Gew.-% bis 50 Gew.-% Carbon Black, 1 Gew.-% bis 30 Gew.-% thermoplastisches olefinisches Kunstharz und/oder 2 Gew.-% bis 15 Gew.-% Öl als Zuschlagstoff(e) aufweist, und/oder wobei die EPDM-Mischung als Rest Vernetzungsmittel aufweist.

Das Vernetzungsmittel ist vorzugsweise Schwefel. Das Carbon Black kann jedes beliebige Carbon Black sein, das als Füllmaterial in Kautschuk-Komponenten verwendbar ist, vorzugsweise vom Typ FEF.

Das thermoplastische olefinische Kunstharz kann durch sämtliche Arten von PP (Polypropylen) und PE (Polyethylen)-Harzen gebildet sein, vorzugsweise durch LDPE- und/oder PE-Wachse.

Die Gleitbeschichtungs-EPDM-Matrix 36 weist vorzugsweise eine höhere Festigkeit und/oder Härte bzw. Steifigkeit und/oder ein höheres Modul auf als die EPDM-Matrix des Dichtungsprofilabschnittes 30.

Die Gleitbeschichtungs-EPDM-Matrix weist vorzugsweise eine Shore A Härte in einem Bereich von 75 bis 98 auf, und/oder eine Zugfestigkeit in einem Bereich von 5 N/mm² bis 8 N/mm².

Besonders bevorzugt ist es, wenn die Gleitbeschichtung einen relativ hohen Füllgrad an Gleitpartikeln aufweist, der vorzugsweise größer ist als 25 %, insbesondere größer als 30 %.

Fig. 5 zeigt eine weitere Ausführungsform eines Profilstranges 26 einer Dichtungsanordnung 24 zur Abdichtung im Bereich einer B-Säule 14. Der Profilstrang 26 beinhaltet einen Befestigungsprofilabschnitt 28, der an einem Verbundblech der B-Säule 14 festgelegt ist, beispielsweise durch Einschieben oder Einklemmen, und andererseits im Bereich einer B-Säulenabdeckung 20 anliegt.

Der Profilstrang 26 beinhaltet einen Dichtungsprofilabschnitt 30, der sich nach der Art einer Lippe von dem Befestigungsprofilabschnitt 28 erstreckt und eine Kontaktfläche 32 aufweist, die in Kontakt mit dem Fenster 16 steht, wobei die Kontaktfläche 32 zumindest abschnittsweise mit einer nicht näher bezeichneten Gleitbeschichtung beschichtet ist.

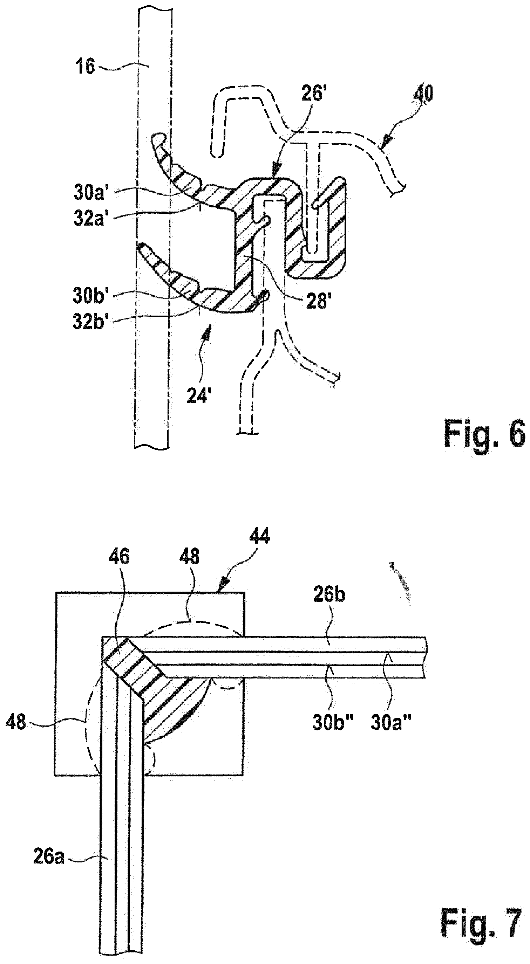

Fig. 6 zeigt eine weitere Ausführungsform eines Profilstranges 26' einer Dichtungsanordnung 24' zur Abdichtung eines Fensterschachtes. Der Befestigungsprofilabschnitt 28' ist hierbei dazu ausgebildet, auf eine Kante eines Karosserietürbleches 40 aufgeschoben zu werden.

Ferner weist der Profilstrang 26' zwei Dichtungsprofilabschnitte 30a', 30b' auf, die sich jeweils als Lippen von dem Befestigungsprofilabschnitt 28' erstrecken, und zwar im Wesentlichen parallel zueinander. Jeder der Dichtungsprofilabschnitte 30a', 30b' weist eine zugeordnete Kontaktfläche 32a', 32b' auf, die mit einer nicht näher bezeichneten Gleitbeschichtung versehen ist, die identisch aufgebaut sein kann wie die oben beschriebene Gleitbeschichtung 34.

Fig. 7 zeigt in schematischer Form eine Spritzgussform 44, in die ein fertiggestellter Profilstrang oder, wie vorliegend dargestellt, zwei Profilstränge 26a, 26b eingelegt ist bzw. sind. Jeder der Profilstränge beinhaltet einen vernetzten Befestigungsprofilabschnitt, einen vernetzten Dichtungsprofilabschnitt sowie eine vernetzte bzw. vulkanisierte Gleitbeschichtungs-EPDM-Matrix. Genauer gesagt weisen die Profilabschnitte 26a, 26b vorliegend jeweils parallele Dichtungsprofilabschnitte 30a", 30b" auf, die wie bei der Ausführungsform der Fig. 6, als parallele Lippen ausgebildet sein können.

Zwischen den Profilsträngen 26a, 26b, die beispielsweise für einen Eckbereich eines Fenster ausgebildet sind, ist ein weiteres Dichtungsmerkmal 46 angespritzt. Das weitere Dichtungsmerkmal 46 stellt einen Eckbereich dieser Dichtungsanordnung dar und ist vorzugsweise ebenfalls aus einem EPDM-Material hergestellt, das nach dem Anspritzen vorzugsweise ebenfalls vulkanisiert wird.

In Fig. 7 ist ferner dargestellt, dass die Profilabschnitte 26a, 26b innerhalb der Spritzgussform 44 in schematisch angedeuteten Klemmbereichen 48 gehalten werden. Aufgrund der Eigenschaften der erfindungsgemäß aufgebrachten Gleitbeschichtung und der Tatsache, dass der Profilstrang aufgrund seiner Vernetzung insgesamt thermisch stabil ist, kann das Dichtungsmerkmal 46 bzw. ggf. weitere Dichtungsmerkmale 46 im Wesentlichen ohne Beeinträchtigung der Oberflächenbeschaffenheit der Profilstränge 26a, 26b angespritzt werden.

Die angespritzten Dichtungsmerkmale 46 weisen vorzugsweise eine geringere Festigkeit bzw. Härte und ein geringeres Modul auf als die vulkanisierte Gleitbeschichtungs-EPDM-Matrix.

Die Gleitbeschichtung ist vorzugsweise mit Bestandteilen hergestellt, wie sie oben ausgeführt worden sind. Zur ergänzenden Offenbarung werden im Folgenden zwei Ausführungsbeispiele offenbart:
Ausführungsbispiel 1

| **Bestandteile** | **phr** | **Gew.-%** |
|---|---|---|
| EPDM | 100,0 | 24 |
| Carbon Black vom Typ FEF N-550 | 200,0 | 48 |
| PE-Wachs (PE Homopolymer, Tropfpunkt 106° C) | 50,0 | 12 |
| UHMW PE-Partikel, fest, sphärisch, mittlerer Durchmesser 100µm | 20,0 | 5 |
| Paraffinisches Öl vom Typ SN 550 | 30,0 | 7 |
| Stearinsäure | 1,0 | 0 |
| Polyethylenglykol (PEG 4000) | 1,0 | 0 |
| ZnOₐₖₜᵢᵥ | 4,0 | 1 |
| Schwefel | 1,0 | 0 |
| Beschleunigungssystem, S-typisch, NO-frei | 6,0 | 1 |
| CaO | 3,5 | 1 |
| **phr_{gesamt}** | **416,5** | **100,0** |

Ausführungsbeispiel 2

| **Bestandteile** | **phr** | **Gew.-%** |
|---|---|---|
| EPDM | 100,0 | 23 |
| Carbon Black vom Typ FEF N-550 | 100,0 | 23 |
| PE-Wachs (PE Homopolymer, Tropfenpunkt 106° C) | 20,0 | 5 |
| UHMW PE-Partikel, fest, sphärisch, mittlerer Durchmesser 100µm | 150,0 | 35 |
| Paraffinisches Öl vom Typ SN 550 | 40,0 | 9 |
| Stearinsäure | 1,0 | 0 |
| Polyethylenglykol (PEG 4000) | 1,0 | 0 |
| ZnOₐₖₜᵢᵥ | 4,0 | 1 |
| Schwefel | 1,0 | 0 |
| Beschleunigungssystem, S-typisch, NO-frei | 6,0 | 1 |
| CaO | 3,5 | 1 |
| **phr_{gesamt}** | **426,5** | **100,0** |

## Patentansprüche

1. Profilstrang (26) für ein Kraftfahrzeug (10), insbesondere für eine Dichtungsanordnung (24) in einem Fenster- oder Türbereich eines Kraftfahrzeuges (10), mit
- einem Befestigungsprofilabschnitt (28), der an einem ersten Teil (20) des Kraftfahrzeugs (10) festlegbar ist, und
- einem mit dem Befestigungsprofilabschnitt (28) verbundenen Dichtungsprofilabschnitt (30), der aus einer vulkanisierten Kautschuk-Matrix hergestellt ist und der dazu ausgebildet ist, Relativbewegungen mit geringer Reibung zwischen dem Profilstrang (26) und einem zweiten Teil (16) des Kraftfahrzeugs (10) zu ermöglichen, wobei eine mit dem zweiten Teil (16) in Berührung tretbare Kontaktfläche (32) des Dichtungsprofilabschnittes (30) mit einer Gleitbeschichtung (34) versehen ist, die eine Gleitbeschichtungs-Matrix (36) und in die Gleitbeschichtungs-Matrix (36) eingebettete Gleitpartikel (38) aufweist, die aus UHMW-PE hergestellt sind,
**dadurch gekennzeichnet, dass**
die Gleitbeschichtungs-Matrix (36) eine vulkanisierte EPDM-Matrix ist und dass der Dichtungsprofilabschnitt (30) und die Gleitbeschichtung (34) co-extrudiert sind.

2. Profilstrang nach Anspruch 1, **dadurch gekennzeichnet, dass** die Gleitbeschichtungs-Matrix (36) aus einer EPDM-Mischung hergestellt ist, die folgende Bestandteile aufweist: 20 Gew.-% bis 40 Gew.-% EPDM und 3 Gew.-% bis 50 Gew.-% Gleitpartikel sowie als Rest Zuschlagstoff(e) und/oder Vernetzungsmittel.

3. Profilstrang nach Anspruch 2, **dadurch gekennzeichnet, dass** die EPDM-Mischung 20 Gew.-% bis 50 Gew.-% Carbon Black, 1 Gew.-% bis 30 Gew.-% thermoplastisches olefinisches Kunstharz und/oder 2 Gew.-% bis 15 Gew.-% Öl als Zuschlagstoff(e) aufweist, und/oder wobei die EPDM-Mischung als Rest Vernetzungsmittel aufweist.

4. Profilstrang nach einem der Ansprüche 1 - 3, **dadurch gekennzeichnet, dass** die vulkanisierte Gleitbeschichtungs-EPDM-Matrix (36) eine höhere Festigkeit/Steifigkeit und/oder ein höheres Modul aufweist als die vulkanisierte Kautschuk-Matrix des Dichtungsprofilabschnittes (30).

5. Profilstrang nach Anspruch 4, **dadurch gekennzeichnet, dass** die Gleitbeschichtungs-EPDM-Matrix (36) eine Shore A Härte in einem Bereich von 75 bis 98 aufweist und/oder eine Zugfestigkeit in einem Bereich von 5 N/mm² bis 8 N/mm².

6. Profilstrang nach einem der Ansprüche 1 - 5, **dadurch gekennzeichnet, dass** die Gleitbeschichtung (34) eine Dicke (D₃₄) in einem Bereich von 0,05 mm bis 0,5 mm aufweist.

7. Profilstrang nach einem der Ansprüche 1 - 6, **dadurch gekennzeichnet, dass** die Gleitpartikel (38) einen mittleren Durchmesser d₃₈ in einem Bereich von 20 µm bis 200 µm aufweisen.

8. Profilstrang nach einem der Ansprüche 1 - 7, **dadurch gekennzeichnet, dass** der Dichtungsprofilabschnitt (30) aus einer vulkanisierten EPDM-Matrix hergestellt ist, die vorzugsweise gleichzeitig mit der Gleitbeschichtungs-EPDM-Matrix (36) urgeformt und/oder vulkanisiert worden ist.

9. Verfahren zum Herstellen eines Profilstranges (26) für ein Kraftfahrzeug (10), insbesondere eines Profilstranges (26) nach einem der Ansprüche 1 bis 8, mit den Schritten:
- Bereitstellen eines Kautschukmaterials aus einer ersten Mischung, und zwar für einen Dichtungsprofilabschnitt (30) des Profilstranges (26),
- Bereitstellen eines EPDM-Materials aus einer zweiten Mischung, wobei das EPDM-Material eine EPDM-Matrix (36) und Gleitpartikel (38) aus UHMW-PE beinhaltet, und zwar für eine Gleitbeschichtung (34) des Dichtungsprofilabschnittes (30), und
- Co-Extrudieren des Kautschuk- und des EPDM-Materials, so dass ein Profilstrang (26) mit einem Dichtungsprofilabschnitt (30) aus dem Kautschukmaterial und einer Gleitbeschichtung (34) an einer Kontaktfläche (32) des Dichtungsprofilabschnittes (30) gebildet wird.

10. Verfahren zum Herstellen einer Dichtungsanordnung (24) für ein Kraftfahrzeug, mit den Schritten:
- Bereitstellen eines Profilstranges (26) gemäß einem der Ansprüche 1 - 8 oder eines gemäß Anspruch 9 hergestellten Profilstranges (26), wobei das Kautschukmaterial des Dichtungsprofilabschnittes (30) ein weiteres EPDM-Material ist, das nach dem Co-Extrusionsschritt gemeinsam mit dem EPDM-Material der Gleitbeschichtung (34) vulkanisiert worden ist;
- Einlegen des Profilstranges (26) in eine Spritzgussform (44);
- Anspritzen von wenigstens einem Dichtungsmerkmale (46) aus einem EPDM-Spritzgussmaterial an den Profilstrang (26).

## Claims

1. A profile strip (26) for a motor vehicle (10), particularly for a sealing assembly (24) in a window or door area of a motor vehicle (10), comprising
- a securing profile section (28) that can be secured on a first part (20) of the motor vehicle (10), and
- a sealing profile section (30) connected to the securing profile section (28), produced from a vulcanized rubber matrix and configured to allow relative movements with reduced friction between the profile strip (26) and a second part (16) of the motor vehicle (10), wherein a contact surface (32) of the sealing profile section (30) that can be brought into contact with the second part (16) is provided with an anti-friction coating (34) that comprises an anti-friction coating matrix (36) and anti-friction particles (38) embedded in the anti-friction coating matrix (36), that are produced from UHMW-PE,
**characterized in that**
the anti-friction coating matrix (36) is a vulcanized EPDM matrix and **in that** the sealing profile section (30) and the anti-friction coating (34) are co-extruded.

2. The profile strip as claimed in 1, **characterized in that** the anti-friction coating matrix (36) is produced from an EPDM mixture that comprises the following components: 20 weight-% to 40 weight-% of EPDM and 3 weight-% to 50 weight-% of anti-friction particles, and as the remainder, at least one of at least an additive and a crosslinking agent.

3. The profile strip as claimed in 2, wherein the EPDM mixture comprises at least one of 20 weight-% to 50 weight-% of Carbon Black, 1 weight-% to 30 weight-% of thermoplastic olefinic synthetic resin and/or 2 weight-% to 15 weight-% oil as additive(s), and/or wherein the EPDM mixture comprises, as a remainder, a crosslinking agent.

4. The profile strip as claimed in anyone of claims 1 - 3, **characterized in that** the vulcanized anti-friction coating EPDM matrix (36) has a higher strength/stiffness and/or a higher modulus than the vulcanized rubber matrix of the sealing profile section (30).

5. The profile strip as claimed in 4, **characterized in that** the anti-friction coating EPDM matrix (36) has a Shore A hardness in the range of 75 to 98 and/or a tensile strength in the range of 5 N/mm² to 8 N/mm².

6. The profile strip as claimed in anyone of claims 1 - 5, **characterized in that** the anti-friction coating (34) has a thickness (D₃₄) in the range of 0.05 mm to 0.5 mm.

7. The profile strip as claimed in anyone of claims 1 - 6, **characterized in that** the anti-friction particles (38) have an average diameter (d₃₈) in a range of 20 µm to 200 µm.

8. The profile strip as claimed in anyone of claims 1 - 7, **characterized in that** the sealing profile section (30) is produced from a vulcanized EPDM matrix, which preferably is simultaneously subjected to at least one of primary molding and vulcanization with the anti-friction coating EPDM matrix (36).

9. A method for producing a profile strip (26) for a motor vehicle (10), particularly a profile strip (26) according to anyone of claims 1 to 8, comprising the steps:
- providing a rubber material composed of a first mixture for a sealing profile section (30) of the profile strip (26),
- providing an EPDM material of a second mixture, wherein the EPDM material comprises an EPDM matrix (36) and anti-friction particles (38) composed of UHMW-PE for an anti-friction coating (34) of the sealing profile section (30), and
- co-extruding the rubber and the EPDM materials so that a profile strip (26) is formed, comprising the sealing profile section (30) made of the rubber material and the anti-friction coating (34) on a contact surface (32) of the sealing profile section (30).

10. A method for producing a sealing assembly (24) for a motor vehicle, comprising the steps:
- providing a profile strip (26) according to anyone of claims 1 - 8 or a profile strip (26) produced according to claim 9, wherein the rubber material of the sealing profile section (30) is a further EPDM material that has been vulcanized after the co-extrusion step together with the EPDM material of the anti-friction coating (34);
- placing of the profile strip (26) in an injection mold (44);
- injection molding of at least one sealing feature (46) composed of an EPDM injection mold material onto the profile strip (26).

## Revendications

1. Cordon profilé (26) pour un véhicule automobile (10), notamment pour un agencement d'étanchéité (24) dans une zone de fenêtre ou de porte d'un véhicule automobile (10), comprenant
- une section de profilé de fixation (28) qui peut être fixée à une première partie (20) du véhicule automobile (10), et
- une section de profilé d'étanchéité (30) reliée à la section de profilé de fixation (28), qui est fabriquée à partir d'une matrice de caoutchouc vulcanisée et qui est configurée pour permettre des mouvements relatifs avec un faible frottement entre le cordon profilé (26) et une deuxième partie (16) du véhicule automobile (10), une surface de contact (32) de la section de profilé d'étanchéité (30) qui peut entrer en contact avec la deuxième partie (16) étant pourvue d'un revêtement de glissement (34), qui présente une matrice de revêtement de glissement (36) et des particules de glissement (38) incorporées dans la matrice de revêtement de glissement (36), qui sont fabriquées à partir d'UHMW-PE, **caractérisé en ce que**
la matrice de revêtement de glissement (36) est une matrice d'EPDM vulcanisée et **en ce que** la section de profilé d'étanchéité (30) et le revêtement de glissement (34) sont coextrudés.

2. Cordon profilé selon la revendication 1, **caractérisé en ce que** la matrice de revêtement de glissement (36) est fabriquée à partir d'un mélange d'EPDM qui présente les constituants suivants : 20 % en poids à 40 % en poids d'EPDM et 3 % en poids à 50 % en poids de particules de glissement, ainsi qu'en tant que reste des additif(s) et/ou agent(s) de réticulation.

3. Cordon profilé selon la revendication 2, **caractérisé en ce que** le mélange d'EPDM présente 20 % en poids à 50 % en poids de noir de carbone, 1 % en poids à 30 % en poids de résine synthétique thermoplastique oléfinique et/ou 2 % en poids à 15 % en poids d'huile en tant qu'additif(s), et/ou dans lequel le mélange d'EPDM présente en tant que reste des agent(s) de réticulation.

4. Cordon profilé selon l'une quelconque des revendications 1 à 3, **caractérisé en ce que** la matrice d'EPDM du revêtement de glissement vulcanisée (36) présente une résistance/rigidité plus élevée et/ou un module plus élevé que la matrice de caoutchouc vulcanisée de la section de profilé d'étanchéité (30).

5. Cordon profilé selon la revendication 4, **caractérisé en ce que** la matrice d'EPDM du revêtement de glissement (36) présente une dureté Shore A dans une plage allant de 75 à 98 et/ou une résistance à la traction dans une plage allant de 5 N/mm² à 8 N/mm².

6. Cordon profilé selon l'une quelconque des revendications 1 à 5, **caractérisé en ce que** le revêtement de glissement (34) présente une épaisseur (D₃₄) dans une plage allant de 0,05 mm à 0,5 mm.

7. Cordon profilé selon l'une quelconque des revendications 1 à 6, **caractérisé en ce que** les particules de glissement (38) présentent un diamètre moyen d₃₈ dans une plage allant de 20 µm à 200 µm.

8. Cordon profilé selon l'une quelconque des revendications 1 à 7, **caractérisé en ce que** la section de profilé d'étanchéité (30) est fabriquée à partir d'une matrice d'EPDM vulcanisée, qui a de préférence été premièrement transformée et/ou vulcanisée en même temps que la matrice d'EPDM du revêtement de glissement (36).

9. Procédé de fabrication d'un cordon profilé (26) pour un véhicule automobile (10), notamment d'un cordon profilé (26) selon l'une quelconque des revendications 1 à 8, comprenant les étapes suivantes :
- la fourniture d'un matériau de caoutchouc à partir d'un premier mélange, et ce pour une section de profilé d'étanchéité (30) du cordon profilé (26),
- la fourniture d'un matériau d'EPDM à partir d'un deuxième mélange, le matériau d'EPDM contenant une matrice d'EPDM (36) et des particules de glissement (38) en UHMW-PE, et ce pour un revêtement de glissement (34) de la section de profilé d'étanchéité (30), et
- la coextrusion du matériau de caoutchouc et d'EPDM de telle sorte qu'un cordon profilé (26) ayant une section de profilé d'étanchéité (30) en le matériau de caoutchouc et un revêtement de glissement (34) sur une surface de contact (32) de la section de profilé d'étanchéité (30) est formé.

10. Procédé de fabrication d'un agencement d'étanchéité (24) pour un véhicule automobile, comprenant les étapes suivantes :
- la fourniture d'un cordon profilé (26) selon l'une quelconque des revendications 1 à 8 ou d'un cordon profilé (26) fabriqué selon la revendication 9, le matériau de caoutchouc de la section de profilé d'étanchéité (30) étant un autre matériau d'EPDM qui a été vulcanisé après l'étape de coextrusion conjointement avec le matériau d'EPDM du revêtement de glissement (34) ;
- la mise en place du cordon profilé (26) dans un moule de moulage par injection (44) ;
- l'injection d'au moins une caractéristique d'étanchéité (46) à partir d'un matériau d'EPDM de moulage par injection sur le cordon profilé (26).
